# EUROPEAN PATENT SPECIFICATION

(11) **EP 4 419 463 B1**
(45) Date of publication and mention of the grant of the patent: **22.10.2025**
(21) Application number: 22772529.8
(22) Date of filing: 05.09.2022
(51) Int. Cl.: B65H 75/40, B65H 75/44

(54) **LIQUID CONNECTOR FOR HOSE TROLLEY**
FLÜSSIGKEITSVERBINDER FÜR EINEN SCHLAUCHWAGEN
CONNECTEUR DE LIQUIDE POUR CHARIOT À TUYAU

(30) Priority: 19.10.2021 EP 21203464
(43) Date of publication of application: 28.08.2024
(73) Proprietor: Husqvarna AB, 561 82 Huskvarna (SE)
(72) Inventor: MOCK, Axel, 89134 Blaustein (DE); SCHLEGEL, Tobias, 89171 Illerkirchberg (DE)
(74) Representative: Finkele, Rolf
(86) International application number: PCT/EP2022/074624
(87) International publication number: WO 2023/066561

(56) References cited:
- CN-U- 204 917 478
- US-A1- 2012 080 568
- US-B2- 7 182 274

## Description

### TECHNICAL FIELD

The present disclosure relates to a hose trolley. More specifically, the present disclosure relates to a liquid connector for the hose trolley having multiple applications.

### BACKGROUND

A hose trolley is generally used to carry a hose box to different installations, such as lawns, gardens, parks, and the like for providing a flow of liquid, such as water. The conventional hose trolley includes a frame that may further include a handle, some support features, one or more wheels and a hose box.

The conventional hose trolley however poses some limitations. The hose trolley does not include additional liquid units such as a watering tap or a sprinkler. Such additional liquid units may be required to perform tasks that may not be readily accomplished by the hose trolley. The watering tap may be required for example for cleaning purposes by users after performing gardening operations such as digging or seeding while the sprinkler may be required to sprinkle an area of a lawn with a fluid i.e., water. Such limitations will then compel the user to travel towards a water source, which may be away from the gardening area. Similarly, the user may need to exert (say bend down) to place a sprinkler on the lawn and then connect the sprinkler with a hose to the water tap. Thus, lack of the additional liquid units with the hose trolley thus demands extra efforts on the part of the user and compels the user to push themselves to unergonomic positions.

An example of a hose trolley is provided in United States patent 7,182,274 (hereinafter referred to as '274 reference). The '274 reference provides a sprinkler apparatus providing multiple operational modes. The apparatus may operate as a conventional traveling sprinkler. In addition, the apparatus may provide one or more additional ports so that a user may attach additional hoses or other watering or irrigation equipment. However, the '274 reference falls short of providing a removable coupling arrangement for the one or more liquid connectors (or additional ports) for coupling the additional liquid units with the sprinkler apparatus. The additional liquid units, due to their fixed nature, may pose limitations when not required for performing a certain application/operation. They may also occupy additional space during storage of the sprinkler apparatus.

Thus, there is a need of an improved hose trolley with a liquid connector providing multiple and customizable applications.

### SUMMARY

In view of the above, it is an objective of the present invention to solve or at least reduce the drawbacks discussed above. The objective is achieved by a liquid connector for a hose trolley according to claim 1. The liquid connector includes a body defining an inlet and a plurality of outlets. The body allows flow of a liquid from the inlet to one or more of the plurality of outlets. A fixing element is adapted to allow coupling of the liquid connector with the hose trolley. The inlet of the body includes a coupling element which allows coupling of a hose. The liquid connector is characterized in that the fixing element is one or more coupling elements provided on the body. The one or more coupling elements allow removable coupling of the liquid connector with a corresponding structure.

Thus, the present disclosure provides a liquid connector that may increase the overall utility of the hose trolley. The liquid connector may provide benefits of an additional liquid unit such as, but not limited to, a water tap. The water tap may be adapted for a wide range of applications such as hand cleaning, bucket filling etc. The liquid connector may further allow connection to a sprinkler. Thus, the sprinkler may be installed in a garden, lawn, or the like without the need of a separate (tripod) arrangement. Further, the liquid connector may promote better (say upright) ergonomic working posture for a user, by limiting a need to pick up accessories such as shower from the ground, installing sprinklers on the ground etc. Furthermore, the removable coupling of the liquid connector may allow for easy servicing and replacement of the liquid connector. The removable coupling may also give the user a freedom to couple the liquid connector with the hose trolley only when required and save space during storage. The removable coupling may also allow the coupling of the liquid connector at various positions and height on the hose trolley according to the user comfort, among other factors.

According to an embodiment of the present disclosure, the plurality of outlets are two outlets. Further, a flow of the liquid from the outlets is regulated by one or more of a regulating valve, and an aqua stop tap. The plurality of outlets of the liquid connector may increase the utility of the liquid connector and hence the hose trolley. Multiple number of the outlets may allow more and different additional liquid units or accessories such as sprinklers, showers, taps and the like, that may be connected to the liquid connector.

According to an embodiment of the present disclosure, the outlet with the regulating valve is provided with a knob to control flow of the liquid therethrough, and the outlet with the aqua stop tap is provided with a self-closing tap connector. The liquid flow from the plurality of outlets may be regulated or controlled using knobs or self-closing tap connectors. This may further improve efficiency and ease of use of the overall operations of the hose trolley.

According to an embodiment of the present disclosure, the corresponding structure is a tube or a handle of the hose trolley. The liquid connector may be removably coupled along different positions, angles, places, and the like with the handle of the hose trolley as per personal preference or application requirements.

According to an embodiment of the present disclosure, the one or more coupling elements allow coupling by one or more of a screw connection, fixtures, and clips. The removable coupling may be accomplished using accessories that are robust, light in weight and may be worked upon by any person even with limited requirement of any tools, technical knowledge, or skill.

According to an embodiment of the present disclosure, the hose trolley includes a frame defining a central axis. The frame includes a handle, and one or more wheels are adapted to transport the frame. Further, the hose trolley includes a hose box housed with the frame and a liquid connector for the hose trolley. The liquid connector includes a body defining an inlet and a plurality of outlets. The body allows flow of a liquid from the inlet to one or more of the plurality of outlets. A fixing element is adapted to allow coupling of the liquid connector with the hose trolley. The hose trolley is characterized in that the fixing element is one or more coupling elements provided on the body. The one or more coupling elements allow removable coupling of the liquid connector with a corresponding structure of the hose trolley. The inlet of the body includes a coupling element which allows coupling of a hose. The hose trolley may employ liquid such as water and find application in lawn or garden watering, water sprinkling, spraying or floor cleaning. The liquid connector may be removable coupled with the hose trolley and may be further connected with additional liquid units as per the requirement or application.

According to an embodiment of the present disclosure, the plurality of outlets are two outlets, where a flow of the liquid from the outlets is regulated by one or more of a regulating valve, and an aqua stop tap. Application of the valve and the tap may allow that the liquid flow from the plurality of outlets of the liquid connector is regulated or controlled for judicious use and reduced wastage.

According to an embodiment of the present disclosure, the outlet with the regulating valve is provided with a knob to control flow of the liquid therethrough, and the outlet with the aqua stop tap is provided with a self-closing tap connector. The liquid flow from the plurality of outlets of the liquid connector may be regulated or controlled using knobs or self-closing tap connectors.

According to an embodiment of the present disclosure, the corresponding structure is a tube or the handle of the hose trolley. The liquid connector may be removably coupled with the handle of the hose trolley, along different positions, arrangements as per the need.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a perspective view of a hose trolley with a liquid connector, in accordance with an aspect of the present disclosure;
**FIG. 2** shows a perspective view of the liquid connector, in accordance with an aspect of the present disclosure;
**FIG. 3** shows a perspective view of the hose trolley with the liquid connector connected with a regulating valve, in accordance with an aspect of the present disclosure; and
**FIG. 4** shows another perspective view of the hose trolley with the liquid connector connected with a sprinkler, in accordance with an aspect of the present disclosure.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

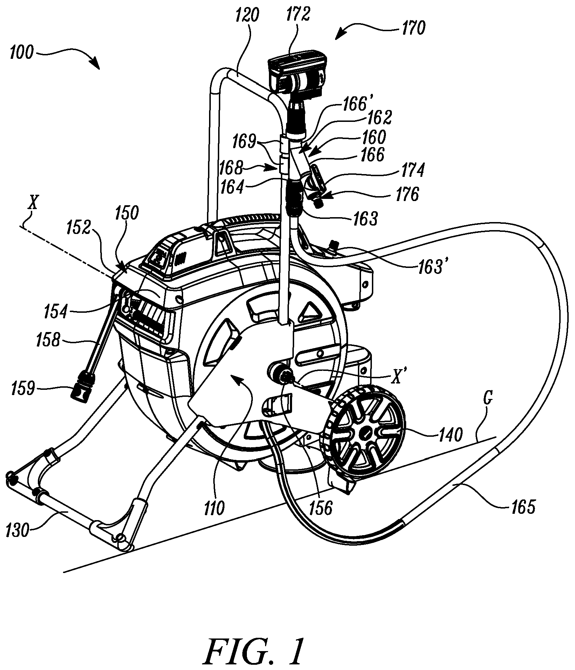

**FIG. 1** illustrates a hose trolley **100.** The hose trolley **100** is used to house, store and transport a hose box **150** to different installations, such as lawns, parks, and the like for providing a flow of liquid, such as water. The flow of liquid may be provided for firefighting, gardening, surface cleaning and the like activities. The hose trolley **100** includes a frame **110** that defines a central axis **X-X'.** The frame **110** may be rigid as well as light weight, depending upon application requirements, user-preference, or other considerations. The frame **110** may be manufactured using a metal (preferably aluminum), alloy and the like.

The frame **110** of the hose trolley **100** includes a handle **120,** a support stand **130.** The hose trolley **100** includes one or more wheels **140** adapted to transport the frame **110,** and the hose box **150** housed with the frame **110** and a liquid connector **160.** The handle **120** of the hose trolley **100** may be pivotably coupled to the frame **110,** for desired ergonomics The pivotable handle **120** may also make the hose trolley **100** more compact for packaging, storage, and travel. In some embodiments, the handle **120** may include a locking mechanism (not shown) to lock the handle **120** in the pivotable position. The locking mechanism may provide a safe and trouble-free operation by disallowing any accidental movement of the pivotable handle **120.** The locking mechanism may be lever such as a ringshaped lever to allow easy locking/unlocking of the handle **120.** In some embodiments, the handle **120** may be telescopic. The telescopic nature of the handle **120** may further improve the ergonomics of the hose trolley **100.** The user may adjust the height of the handle **120** to a comfortable position and easily hold or maneuver the hose trolley **100** on the ground **"G".**

The support stand **130** of the hose trolley **100** may have a U-shape grip. The support stand **130** may preferably be formed in one piece or alternatively may be formed in two pieces connected to each other by any means know in the art. The one or more wheels **140** of the hose trolley **100** may be rotatably coupled with an axle (not shown). The one or more wheels **140** may ease support and movement of the hose trolley **100** on the ground **"G"** or improve portability between different locations/installations. In some embodiments, the one or more wheels **140** may be caster wheels. The caster wheels **140** may help to easily manipulate the hose trolley **100** on the ground **"G".** In some embodiments, the one or more wheels **140** and the axle may be provided with dampers (not shown) to avoid shocks incurred due to movement on any uneven surfaces, among other considerations. In some embodiments, the one or more wheels **140** may be powered by an electric motor (not shown), or any other powering means. In some embodiments, the one or more wheels **140** may be removably coupled with the frame **110.** The one or more wheels **140** may be removable to allow easy servicing, or even replacement. Further, the removable feature of the one or more wheels **140** may make the hose trolley **100** more compact for packaging.

The hose box **150** housed with the frame **110** of the hose trolley **100** may have a circular, a rectangular or any other shape without limiting the scope of the disclosure. The hose box **150** may be made from metal, fiberglass, or plastic. The hose box **150** may include a first part **152** and a second part **154.** The first part **152** and the second part **154** may be temporarily or permanently attached to each other, such as by fasteners, screws, any suitable means as used or known in the art. The hose box **150** may be connected to an external liquid source via a hose (not shown). The hose may be connected to the frame **110** of the hose trolley **100** by a nipple **156.** Further, the hose box **150** may house a hose reel (not shown) that may wind and unwind a hose **158.** The free end of the hose **158** may be connected to a coupling element **159** to couple accessories such as, but not limited to, a shower head, spray gun and the like.

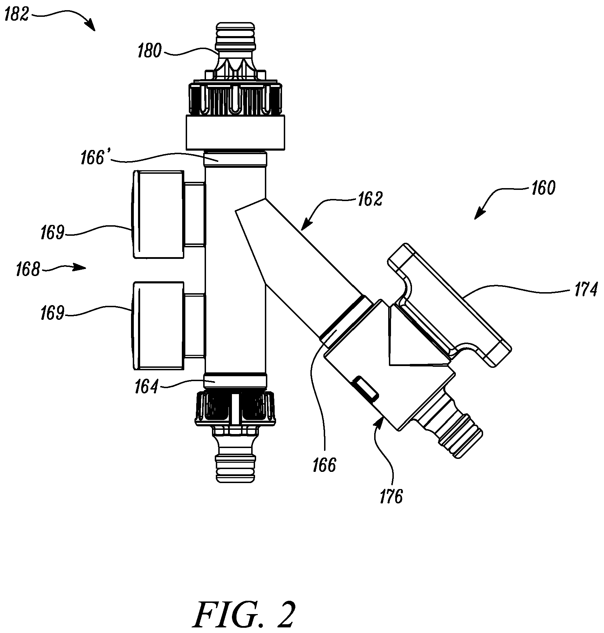

The liquid connector **160,** as illustrated in **FIG. 2****,** includes a body **162** defining an inlet **164** and a plurality of outlets **166, 166'.** The body **162** allows flow of a liquid from the inlet **164** to one or more of the plurality of outlets **166, 166'.** A fixing element **168** is adapted to allow coupling of the liquid connector **160** with the hose trolley **100.** The fixing element **168** of the present disclosure is one or more coupling elements **169** provided on the body **162.** The one or more coupling elements **169** allow removable coupling of the liquid connector **160** with a corresponding structure of the hose trolley **100.** In some embodiments, the corresponding structure may be a tube or a handle **120** of the hose trolley **100** (as shown in **FIG. 1****).** The liquid connector **160** may be removably coupled with the handle **120** of the hose trolley **100.** The user may removably couple the liquid connector **160** along any position, length, angle of the handle **120** according to application requirements.

In some embodiments, the one or more coupling elements **169** allow removable coupling by one or more of a screw connection, fixtures, and clips. Thus, the removable coupling may be accomplished using accessories that are robust, light in weight and may be worked upon by any person with limited application of different tools, technical knowledge, or skill. In some embodiments, the one or more coupling elements **169** may be separately and fixedly provided with the handle **120** of the hose trolley **100.** The liquid connector **160** may then be engaged with the one or more coupling elements **169.**

In some embodiments, the inlet **164** of the body **162** of the liquid connector **160** includes a coupling element **163** which allows coupling of a hose **165.** The hose **165** is coupled to the inlet **164** of the body **162** of the liquid connector **160** for connection with the liquid source. The present disclosure exemplary refers to water, interchangeably as the liquid, without any limitation, as the water finds vast application in irrigation of plants, lawns, gardens, and the like.

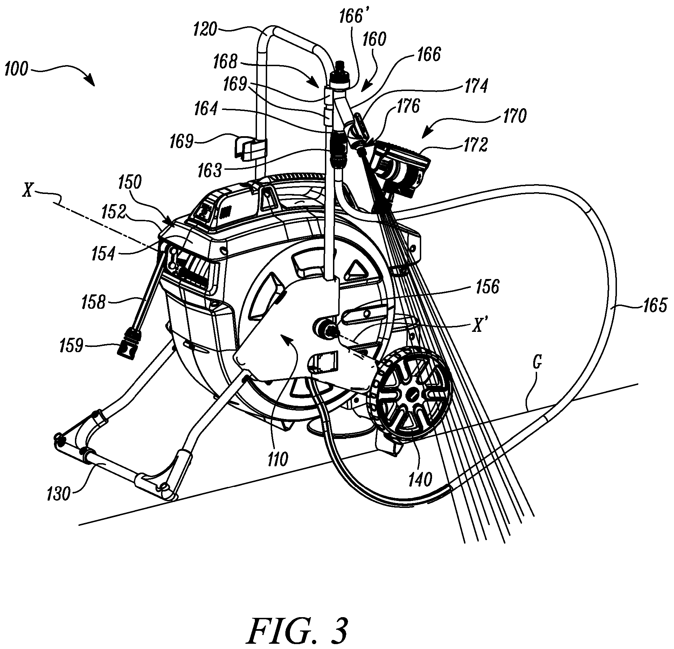

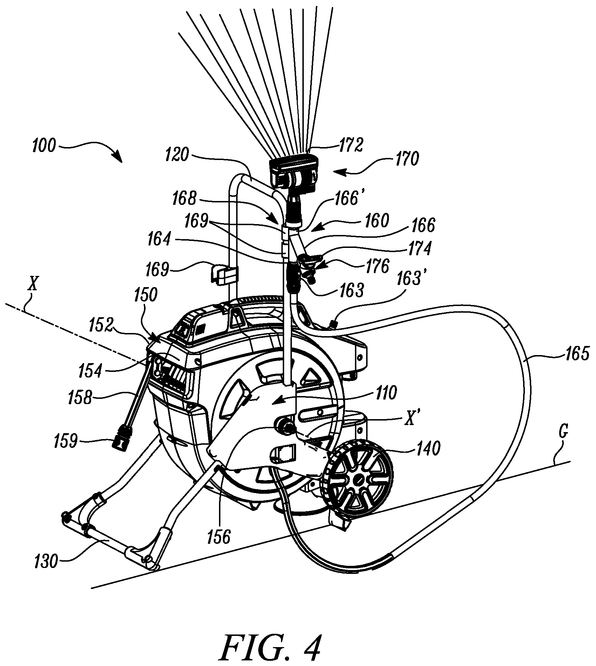

As illustrated in **FIGS. 3** and **4****,** the plurality of outlets **166, 166'** of the water connector **160** are two outlets **166, 166'.** The plurality of outlets **166, 166'** of the water connector **160** may increase the utility of the water connector **160** and hence the hose trolley **100.** The outlets **166, 166'** allow application of additional watering units **170,** hoses and the like, that may be rotatably and removably connected to the water connector **160** as shown in **FIG. 4****.** The additional watering units **170** may be one or more of a sprinkler **172,** water tap (not shown) or the like.

In some embodiments, the frame **110** of the hose trolley **100** includes an additional coupling element **163'** which allows coupling of a hose (not shown) or the additional watering unit **170** for non-use case thereof, as shown in **FIG. 3****.**

In some embodiments, the plurality of outlets **166, 166'** may be provided with different valves, switches and the like to regulate or control flow of the water. The water flow may be regulated by one or more of a regulating valve **176** as shown in **FIG. 3****,** and an aqua stop tap **182.** The outlet **166** with the regulating valve **176** is provided with a knob **174** to control flow of the water therethrough. The user may easily move or rotate the knob **174** as per the requirement to control water Further, the outlet **166'** with the aqua stop tap **182** is provided with a self-closing tap connector **180.** Thus, the water outflow from the outlet **166'** is automatically ceased as soon as the additional watering unit **170** is disengaged.

Thus, the present disclosure provides the water connector **160** that may increase the overall utility of the hose trolley **100.** The water connector **160** may connect different additional watering unit **170.** The water tap may be adapted for a wide range of applications such as hand cleaning, bucket filling etc. The water connector **160** may further connect a sprinkler **172.** Furthermore, the removable coupling of the water connector **160** may allow for easy servicing and replacement of the water connector **160.** The removable coupling may also give the user a freedom to couple the water connector **160** with the hose trolley **100** only when required.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Hose Trolley
- **110**: Frame
- **120**: Handle
- **130**: Support Stand
- **140**: Wheels
- **150**: Hose Box
- **152**: First Part
- **154**: Second Part
- **156**: Nipple
- **158**: Hose
- **159**: Coupling Element
- **160**: Liquid/ Water Connector
- **162**: Body
- **163**: Coupling Element
- **163'**: Additional Coupling Element
- **164**: Inlet
- **165**: Hose
- **166**: Outlet
- **166'**: Outlet
- **168**: Fixing Element
- **169**: Coupling Element
- **170**: Additional Watering Units
- **172**: Sprinkler
- **174**: Knob
- **176**: Regulating Valve
- **180**: Self-closing Tap Connector
- **182**: Aqua Stop Tap
- **X-X'**: Central Axis
- **G**: Ground

## Claims

1. A liquid connector **(160)** for a hose trolley **(100),** comprising:
a body **(162)** defining an inlet **(164)** and a plurality of outlets **(166, 166'),** wherein the body **(162)** allows flow of a liquid from the inlet **(164)** to one or more of the plurality of outlets **(166, 166');** and
a fixing element **(168)** adapted to allow coupling of the liquid connector **(160)** with a hose trolley **(100),**
wherein the inlet **(164)** of the body **(162)** includes a coupling element **(163)** which allows coupling of a hose **(165);**
**characterized in that:**
the fixing element **(168)** is one or more coupling elements **(169)** provided on the body **(162),** wherein the one or more coupling elements **(169)** allow removable coupling of the liquid connector **(160)** with a corresponding structure.

2. The liquid connector **(160)** of claim 1, wherein the plurality of outlets **(166, 166')** are two outlets **(166, 166'),** wherein a flow of the liquid from the outlets **(166, 166')** is regulated by one or more of a regulating valve **(176),** and an aqua stop tap **(182).**

3. The liquid connector **(160)** of any of the preceding claims, wherein the outlet **(166)** with the regulating valve **(176)** is provided with a knob **(174)** to control flow of the liquid therethrough, and the outlet **(166')** with the aqua stop tap **(182)** is provided with a self-closing tap connector **(180).**

4. The liquid connector **(160)** of any of the preceding claims, wherein the corresponding structure is a tube or a handle **(120)** of the hose trolley **(100).**

5. The liquid connector **(160)** of any of the preceding claims, wherein the one or more coupling elements **(169)** allow coupling by one or more of a screw connection, fixtures, and clips.

6. A hose trolley **(100)** with a liquid connector **(160)** of any one of claims 1-5,
the hose trolley **(100)** comprising:
a frame **(110)** defining a central axis **(X-X'),** wherein the frame **(110)** includes:
a handle **(120);** and
one or more wheels **(140)** adapted to transport the frame **(110);**
and
a hose box **(150)** housed with the frame **(110).**

7. The hose trolley **(100)** of claim 6, wherein the corresponding structure is a tube or the handle **(120)** of the hose trolley **(100).**

## Patentansprüche

1. Flüssigkeitsanschluss **(160)** für einen Schlauchwagen **(100),** umfassend:
einen Körper **(162),** der einen Einlass **(164)** und eine Vielzahl von Auslässen **(166, 166')** definiert, wobei der Körper **(162)** ermöglicht den Fluss einer Flüssigkeit von dem Einlass **(164)** zu einem oder mehreren der Vielzahl von Auslässen **(166, 166');** und
ein Befestigungselement **(168),** das angepasst ist, um ein Koppeln des Flüssigkeitsanschlusses **(160)** mit einem Schlauchwagen **(100)** zu ermöglichen,
wobei der Einlass **(164)** des Körpers **(162)** ein Kopplungselement **(163),** das das Koppeln eines Schlauches **(165)** ermöglicht;
**dadurch gekennzeichnet, dass:**
das Befestigungselement **(168)** ein oder mehrere Kopplungselemente **(169)** ist, die auf dem Körper **(162)** bereitgestellt sind, wobei das eine oder die mehreren Kopplungselemente **(169)** ein abnehmbares Koppeln des Flüssigkeitsanschlusses **(160)** mit einer entsprechenden Struktur ermöglicht.

2. Flüssigkeitsanschluss **(160)** nach Anspruch 1, wobei die Vielzahl von Auslässen **(166,166')** zwei Auslässe **(166,166')** sind, wobei ein Fluss der Flüssigkeit aus den Auslässen **(166,166')** durch eines oder mehrere von einem Regelventil **(176)** und einem Aquastop-Hahn **(182)** geregelt wird.

3. Flüssigkeitsanschluss **(160)** nach einem der vorstehenden Ansprüche, wobei der Auslass **(166)** mit dem Regelventil **(176)** mit einem Knopf **(174)** bereitgestellt ist, um den Fluss der Flüssigkeit dort hindurch zu steuern, und der Auslass **(166')** mit dem Aquastop-Hahn **(182)** mit einem selbstschließenden Hahnanschluss **(180)** versehen ist.

4. Flüssigkeitsanschluss **(160)** nach einem der vorstehenden Ansprüche, wobei die entsprechende Struktur ein Rohr oder ein Griff **(120)** des Schlauchwagens **(100)** ist.

5. Flüssigkeitsanschluss **(160)** nach einem der vorstehenden Ansprüche, wobei das eine oder die mehreren Kopplungselemente **(169)** das Koppeln durch eines oder mehrere von einem Schraubanschluss, Befestigungen und Clips ermöglicht.

6. Schlauchwagen **(100)** mit einem Flüssigkeitsanschluss **(160)** nach einem der Ansprüche 1 bis 5,
Schlauchwagen **(100),** umfassend:
einen Rahmen **(110),** der eine Mittelachse **(X-X')** definiert, wobei der Rahmen **(110)** einschließt:
einen Griff **(120);** und
ein oder mehrere Räder **(140)** die angepasst sind, um den Rahmen **(110)** zu transportieren; und
eine Schlauchbox **(150),** die in dem Rahmen **(110)** untergebracht ist.

7. Schlauchwagen **(100)** nach Anspruch 6, wobei die entsprechende Struktur ein Rohr oder der Griff **(120)** des Schlauchwagens **(100)** ist.

## Revendications

1. Raccord de liquide **(160)** pour un dévidoir sur roues **(100),** comprenant :
un corps **(162)** définissant une entrée **(164)** et une pluralité de sorties **(166, 166'),** dans lequel le corps **(162)** permet l'écoulement d'un liquide depuis l'entrée **(164)** vers une ou plusieurs sorties de la pluralité de sorties **(166, 166')** ; et
un élément de fixation **(168)** adapté pour permettre l'accouplement du raccord de liquide **(160)** avec un dévidoir sur roues **(100),**
dans lequel l'entrée **(164)** du corps **(162)** comporte un élément d'accouplement **(163)** qui permet l'accouplement d'un tuyau **(165)** ;
**caractérisé en ce que** :
l'élément de fixation **(168)** est un ou plusieurs éléments d'accouplement **(169)** prévus sur le corps **(162),** dans lequel le ou les éléments d'accouplement **(169)** permettent un accouplement amovible du raccord de liquide **(160)** avec une structure correspondante.

2. Raccord de liquide **(160)** selon la revendication 1, dans lequel la pluralité de sorties **(166, 166')** sont deux sorties **(166, 166'),** dans lequel un écoulement de liquide provenant des sorties **(166, 166')** est régulé par une ou plusieurs d'une vanne de régulation **(176)** et d'un robinet d'arrêt d'eau **(182).**

3. Raccord de liquide **(160)** selon l'une quelconque des revendications précédentes, dans lequel la sortie **(166)** avec la vanne de régulation **(176)** est pourvue d'un bouton **(174)** pour commander l'écoulement du liquide à travers celle-ci, et la sortie **(166')** avec le robinet d'arrêt d'eau **(182)** est pourvue d'un raccord de robinet à fermeture automatique **(180).**

4. Raccord de liquide **(160)** selon l'une quelconque des revendications précédentes, dans lequel la structure correspondante est un tube ou un manche **(120)** du dévidoir sur roues **(100).**

5. Raccord de liquide **(160)** selon l'une quelconque des revendications précédentes, dans lequel le ou les éléments d'accouplement **(169)** permettent l'accouplement par un ou plusieurs parmi un raccord à vis, des accessoires et des attaches.

6. Dévidoir sur roues **(100)** doté d'un raccord de liquide **(160)** selon l'une quelconque des revendications 1 à 5,
le dévidoir sur roues **(100)** comprenant :
un cadre **(110)** définissant un axe central **(X-X'),** dans lequel le cadre **(110)** comporte :
un manche **(120)** ; et
une ou plusieurs roues **(140)** adaptées au transport du cadre **(110)** ; et
une boîte à tuyaux **(150)** logée dans le cadre **(110).**

7. Dévidoir sur roues **(100)** selon la revendication 6, dans lequel la structure correspondante est un tube ou le manche **(120)** du dévidoir sur roues **(100).**
